# EUROPEAN PATENT APPLICATION

(11) **EP 4 750 004 A1**
(43) Date of publication of application: **27.05.2026**
(21) Application number: 24219122.9
(22) Date of filing: 11.12.2024
(51) Int. Cl.: H04L 12/46

(54) **NETWORK DEVICE AND DATA PROCESSING METHOD**

(30) Priority: 22.11.2024 CN 202411687977
(71) Applicant: New H3C Technologies Co., Ltd., Hangzhou, Zhejiang 310052 (CN)
(72) Inventor: KE, Wei, Beijing 100102 (CN); LEI, Liqin, Beijing 100102 (CN)
(74) Representative: IPAZ

(57) **Abstract**

Examples of the present disclosure provide a network device and a data processing method, which relates to the field of communication technology. The network device includes a FlexE interface board, a backplane and at least one forwarding board; wherein a first VLAN configuration unit is provided on the FlexE interface board, and the first VLAN configuration unit is connected to the backplane through a serializer/deserializer; a mapping relationship between FlexE service ports and FlexE channels is stored in the first VLAN configuration unit; a second VLAN configuration unit is provided on the at least one forwarding board, and the second VLAN configuration unit is connected to the backplane through a serializer/deserializer; the mapping relationship between the FlexE service ports and the FlexE channels is stored in the second VLAN configuration unit; the serializer/deserializer transmits a data frame by using an Ethernet backplane protocol. This solution can reduce a difficulty of chip selection and hardware cost of the network device and improve a scalability of the network device.

## Description

### Technical Field

The present disclosure relates to the field of communication technology, and to a network device and a data processing method.

### Background

In a network device, a Flexible Ethernet (FlexE) interface board and a forwarding board are connected to a backplane through a serializer/deserializer (such as SerDes), and the FlexE interface board and the forwarding board use flexible channelization protocols (such as Interlaken protocol) to achieve flexible channelization on the serializer/deserializer data link, thereby ensuring that forwarding resource of the forwarding board are hard-isolated from the service.

However, there are few chips that support the Interlaken protocol, which makes it difficult to select chips for the FlexE interface board and forwarding board. In addition, the cost of chips that support the Interlaken protocol is high, which increases hardware cost of a network device. The existing various communication protocols and technical specifications cannot fully meet needs of flexible channelization on a system side of a FlexE interface card. Therefore, there are great technical compatibility problems in solution design, which is not conducive to innovation and upgrade of the network device, and the scalability of the network device is poor.

### Summary

The objective of the examples of the present disclosure is to provide a network device and a data processing method to reduce a difficulty of chip selection and hardware cost of the network device and improve a scalability of the network device. The specific technical solutions are as follows:
In a first aspect, an example of the present disclosure provides a network device, including a FlexE interface board, a backplane, and at least one forwarding board;
wherein a first virtual local area network (VLAN) configuration unit is provided on the FlexE interface board, and the first VLAN configuration unit is connected to the backplane through a serializer/deserializer; a mapping relationship between FlexE service ports and FlexE channels is stored in the first VLAN configuration unit;
wherein a second VLAN configuration unit is provided on the at least one forwarding board, and the second VLAN configuration unit is connected to the backplane through the serializer/deserializer; the mapping relationship between the FlexE service ports and the FlexE channels is stored in the second VLAN configuration unit;
the serializer/deserializer transmits a data frame by using an Ethernet backplane protocol.

In some examples, the first VLAN configuration unit is to:
receive a first data frame from a target FlexE service port on the FlexE interface board;
determine a target FlexE channel corresponding to the target FlexE service port according to the mapping relationship between the FlexE service ports and the FlexE channels;
add a first VLAN tag corresponding to the target FlexE channel to the first data frame to obtain a second data frame, wherein a VLAN identifier included in the first VLAN tag is an identifier of the target FlexE channel;
send the second data frame to a main forwarding board in the at least one forwarding board.

In some examples, the first VLAN configuration unit is specifically to:
in response to determining that the first data frame carries a second VLAN tag, acquire the first VLAN tag corresponding to the target FlexE channel" and fill other fields included in the first VLAN tag with other fields included in the second VLAN tag, wherein the other fields in a VLAN tag are fields other than a VLAN identifier field in this VLAN tag;
add the filled first VLAN tag to the first data frame to obtain the second data frame.

In some examples, the second VLAN configuration unit is to:
receive the second data frame from the FlexE interface board;
acquire the identifier of the target FlexE channel included in the first VLAN tag carried in the second data frame, and delete the first VLAN tag carried in the second data frame to obtain the first data frame;
perform post-processing on the first data frame according to a logical inbound port of the forwarding board corresponding to the identifier of the target FlexE channel.

In some examples, the second VLAN configuration unit is to:
acquire a third data frame sent to a target FlexE service port on the FlexE interface board;
determine a target FlexE channel corresponding to the target FlexE service port according to the mapping relationship between the FlexE service ports and the FlexE channels;
add a first VLAN tag corresponding to the target FlexE channel to the third data frame to obtain a fourth data frame, wherein a VLAN identifier included in the first VLAN tag is an identifier of the target FlexE channel;
send the fourth data frame to the FlexE interface board.

In some examples, the second VLAN configuration unit is to:
in response to determining that the third data frame carries a third VLAN tag, acquire the first VLAN tag corresponding to the target FlexE channel, and fill other fields included in the first VLAN tag with other fields included in the third VLAN tag, wherein the other fields in a VLAN tag are fields other than a VLAN identifier field in this VLAN tag;
add the filled first VLAN tag to the third data frame to obtain a fourth data frame.

In some examples, the first VLAN configuration unit is to:
receive the fourth data frame from the at least one forwarding board;
delete the first VLAN tag carried in the fourth data frame to obtain the third data frame;
determine the target FlexE service port corresponding to the identifier of the target FlexE channel included in the first VLAN tag according to the mapping relationship between the FlexE service ports and the FlexE channels;
forward the third data frame through the target FlexE service port.

In some examples, the first VLAN tag is added between a source media access control MAC address field of a data frame and an Ethernet type field.

In some examples, the first VLAN tag is added between the source MAC address field of the data frame and a VLAN tag carried in the data frame.

In some examples, the at least one forwarding board further includes a central processing unit (CPU), and the CPU is to:
create multiple VLAN logical ports according to a specification of the FlexE interface board, and initialize the mapping relationship between the FlexE service ports and the FlexE channels according to the multiple VLAN logical ports, wherein the VLAN logical ports correspond one-to-one with the FlexE channels;
receive a creation command for a target FlexE service port, wherein the creation command includes a client identifier of the target FlexE service port and a required target bandwidth;
allocate a target FlexE channel with the target bandwidth to the target FlexE service port in response to determining that a remaining FlexE service port bandwidth is greater than or equal to the target bandwidth and there is an unoccupied FlexE channel;
issue a mapping relationship between the target FlexE service port and the target FlexE channel to the first VLAN configuration unit and the second VLAN configuration unit.

In a second aspect, an example of the present disclosure provides a data processing method, which is applied to any of the above-mentioned network devices, wherein the network device includes a FlexE interface board, a backplane, and at least one forwarding board; the method includes:
a first VLAN configuration unit provided on the FlexE interface board receiving a first data frame from a target FlexE service port on the FlexE interface board; determining a target FlexE channel corresponding to the target FlexE service port according to a mapping relationship between FlexE service ports and FlexE channels; adding a first VLAN tag corresponding to the target FlexE channel to the first data frame to obtain a second data frame, wherein a VLAN identifier included in the first VLAN tag is an identifier of the target FlexE channel; and sending the second data frame to a main forwarding board in the at least one forwarding board;
a second VLAN configuration unit provided on the main forwarding board performing post-processing on the second data frame.

In some examples, adding the first VLAN tag corresponding to the target FlexE channel to the first data frame to obtain the second data frame, includes:
in response to determining that the first data frame carries a second VLAN tag, acquiring the first VLAN tag corresponding to the target FlexE channel;
filling other fields included in the first VLAN tag with other fields included in the second VLAN tag, wherein the other fields in a VLAN tag are fields other than a VLAN ID field in this VLAN tag;
adding the filled first VLAN tag to the first data frame to obtain the second data frame.

In some examples, performing the post-processing on the second data frame, includes:
acquiring the identifier of the target FlexE channel included in the first VLAN tag carried in the second data frame, and deleting the first VLAN tag carried in the second data frame to obtain the first data frame;
performing the post-processing on the first data frame according to a logical inbound port of the forwarding board corresponding to the identifier of the target FlexE channel.

In some examples, the first VLAN tag is added between a source MAC address field of the first data frame and an Ethernet type field.

In some examples, the first VLAN tag is added between the source MAC address field of the first data frame and the second VLAN tag carried in the first data frame.

In a third aspect, an example of the present disclosure provides a data processing method, which is applied to any of the above-mentioned network devices, wherein the network device includes a FlexE interface board, a backplane, and at least one forwarding board; the method includes:
a second VLAN configuration unit provided on a main forwarding board of the at least one forwarding board acquiring a third data frame sent to a target FlexE service port on the FlexE interface board; determining a target FlexE channel corresponding to the target FlexE service port according to a mapping relationship between the FlexE service ports and the FlexE channels; adding a first VLAN tag corresponding to the target FlexE channel to the third data frame to obtain a fourth data frame, wherein a VLAN identifier included in the first VLAN tag is an identifier of the target FlexE channel; sending the fourth data frame to the FlexE interface board;
a first VLAN configuration unit provided on the FlexE interface board forwarding the fourth data frame through the target FlexE service port.

In some examples, adding the first VLAN tag corresponding to the target FlexE channel to the third data frame to obtain the fourth data frame, includes:
in response to determining that the third data frame carries a third VLAN tag, acquiring the first VLAN tag corresponding to the target FlexE channel;
filling other fields included in the first VLAN tag with other fields included in the third VLAN tag, wherein the other fields in a VLAN tag are fields other than a VLAN identifier field in this VLAN tag;
adding the filled first VLAN tag to the third data frame to obtain the fourth data frame.

In some examples, forwarding the fourth data frame through the target FlexE service port, includes:
deleting the first VLAN tag carried in the fourth data frame to obtain the third data frame;
determining the target FlexE service port corresponding to the identifier of the target FlexE channel included in the first VLAN tag according to the mapping relationship between the FlexE service ports and the FlexE channels;
forwarding the third data frame through the target FlexE service port.

In some examples, the first VLAN tag is added between a source MAC address field of the third data frame and an Ethernet type field.

In some examples, the first VLAN tag is added between the source MAC address field of the third data frame and the third VLAN tag carried in the third data frame.

Beneficial effects of the examples of the present disclosure are as follows:
In the technical solution provided by the examples of the present disclosure, the VLAN configuration units are respectively provided on the FlexE interface board and the forwarding board, and the VLAN configuration unit is connected to the backplane through the serializer/deserializer (such as SerDes), and the serializer/deserializer transmits the data frame by using the Ethernet backplane protocol. The Ethernet backplane protocol is a standard protocol, and most of the existing FlexE interface boards and forwarding boards support the Ethernet backplane protocol, which reduces the difficulty of chip selection for the FlexE interface board and the forwarding board, and there is no need to use a dedicated chip that supports the Interlaken protocol, thereby reducing the hardware cost of the network device. In the examples of the present disclosure, the difficulty of chip selection is reduced, the hardware cost is reduced, and the Ethernet backplane protocol is the standard protocol. The Ethernet backplane protocol is used to meet the needs of flexible channelization on the system side of the FlexE interface card, and the technical compatibility is great, which provides more options for the manufacture of the network device, improves the flexibility of the manufacture of the network device, and improves the scalability of the network device.

Of course, it is not necessary for any product or method implementing the present disclosure to achieve all the advantages described above simultaneously.

### Brief Description of the Drawings

In order to more clearly describe the technical solutions of the examples of the present disclosure or the prior art, accompanying drawings that need to be used in the examples or the prior art will be briefly described below. Obviously, the accompanying drawings described below are for only some of the examples of the present disclosure. For those skilled in the art, they may also obtain other examples based on these accompanying drawings.
Fig. 1 is a structural schematic diagram of an existing network device;
Fig. 2 is a structural schematic diagram of a network device provided by an example of the present disclosure;
Fig. 3 is a first schematic diagram of a FlexE service port creation process provided by an example of the present disclosure;
Fig. 4 is a second schematic diagram of a FlexE service port creation process provided by an example of the present disclosure;
Fig. 5 is a schematic diagram of a FlexE tag provided by an example of the present disclosure;
Fig. 6 is a schematic diagram of a data processing flow in a packet receiving direction provided by an example of the present disclosure;
Fig. 7a is a first schematic diagram of adding a FlexE tag according to an example of the present disclosure;
Fig. 7b is a second schematic diagram of adding a FlexE tag provided by an example of the present disclosure;
Fig. 8 is a third schematic diagram of adding a FlexE tag provided by an example of the present disclosure;
Fig. 9 is a schematic diagram of a data processing flow in a packet sending direction provided by an example of the present disclosure;
Fig. 10 is a first flow chart of a data processing method provided by an example of the present disclosure;
Fig. 11 is a second flow chart of a data processing method provided by an example of the present disclosure.

### Detailed Description

The technical solutions in the examples of the present disclosure will be clearly and completely described below with reference to the accompanying drawings in the examples of the present disclosure. Obviously, the described examples are only some, and not all, of the examples of the present disclosure. All other examples obtained based on the examples of the present disclosure those skilled in the art fall into the scope of protection of the present disclosure.

With the rapid development of network technology, the demand for transmission bandwidth and flexibility for services such as data centers and broadband access is increasing. As a new Ethernet standard, FlexE technology can meet the needs of different rates and service levels through flexible scheduling of Ethernet channels. FlexE technology is widely used in network devices. By decoupling a Multi- Media Access Control (MAC) layer and a Physical (PHY) layer of Ethernet, a low-cost, highly reliable, and dynamically allocated interface technology can be realized.

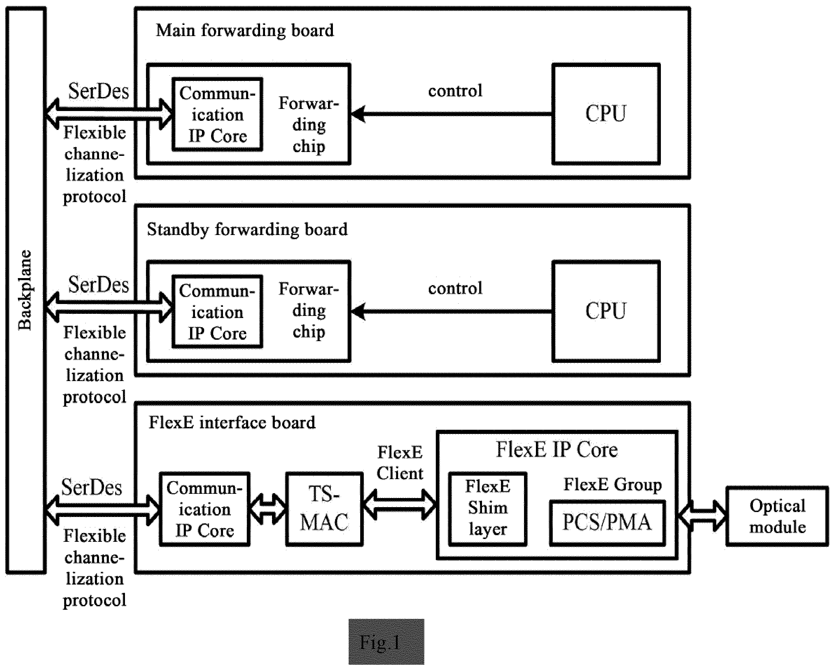

The structure of the network device is shown in Fig. 1, including a FlexE interface board, multiple forwarding boards and a Backplane, such as a main forwarding board and a standby forwarding board shown in Fig. 1. The FlexE interface board and the multiple forwarding boards are connected to the backplane through SerDes (serializer/deserializer). Wherein the FlexE interface board may include a FlexE Intellectual Property Core (IP Core), a Time Synchronized Mesh Protocol for Media Access Control (TS-MAC) module and a communication IP Core on a system side, etc., and the forwarding board may include a forwarding chip and a central processing unit (CPU), etc.

Wherein the FlexE IP Core is to implement a FlexE Shim layer and a Physical Coding Sublayer (PCS) or a Physical Medium Attachment (PMA), and to implement mapping and demapping of a FlexE Client and a FlexE Group; the TS-MAC module is to implement a FlexE client rate matching; the communication IP Core on the system side and a communication IP Core provided on the forwarding chip are to implement flexible channelization between the FlexE interface board and the forwarding board. The CPU is to control the forwarding chip and modules on the FlexE interface board.

In the network device, a FlexE interface is generally expanded in the form of the FlexE interface board. A panel side of the FlexE interface board is connected to a remote device through an optical module, and a panel side of the FlexE interface board uses the FlexE Shim layer to achieve decoupling of the MAC layer and the PHY layer of the FlexE interface; the system side of the FlexE interface board is connected to the forwarding board. Usually, the FlexE interface uses hardware chips such as Field-Programmable Gate Array (FPGA) or MAC chips to implement hard channelization of the FlexE service port. The system side of the FlexE interface board also needs to implement channelization slicing to ensure that forwarding resource of the forwarding board is hard-isolated from the service, thereby requiring that a channel between the system side of the FlexE interface board and the forwarding board needs to meet flexible channelization.

Currently, the network device generally uses designated flexible channelization protocols (such as the Interlaken protocol) to implement flexible channelization on SerDes data links. The communication IP Core shown in Fig. 1 can be the Interlaken IP Core. The Interlaken protocol is a high-bandwidth, high-performance data transmission protocol for inter-chip communication. It optimizes a SerDes technology and reduces complexity of protocol processing to achieve efficient and flexible communication. The main features of the Interlaken protocol are scalability and low-latency data transmission, which adapts to the flexible channelization requirements of the system side of the FlexE interface board.

However, the network device based on the Interlaken protocol has the following challenges:
(1) Limited chip support: in the network device, especially in view of the selection of chips for FlexE interface boards and forwarding boards, a major problem is that most of the current forwarding chips and FlexE interface boards do not support the Interlaken protocol. This limitation greatly increases the difficulty of chip selection and increases the hardware cost of R&D and deployment.
(2) High hardware cost: in order to meet the needs of flexible channelization, the network device needs to use a dedicated chip, such as a chip that supports the Interlaken protocol. The dedicated chip is expensive and may increase the complexity of the overall system design, which causes more technical and economic burdens to the research and development and application of the network device.
(3) Technical compatibility: the existing communication protocols and technical specifications cannot fully meet the requirements of flexible channelization on the system side of the FlexE interface card. This leads to great technical compatibility problems in solution design, which is not conducive to the innovation and upgrade of the network device. For chips that support the Interlaken protocol in some slots, the scalability of a new chassis design is poor.

In addition, there are fewer chips that support the Interlaken protocol, and the Interlaken protocol is incompatible with most chips, which results in poor scalability of the network device.

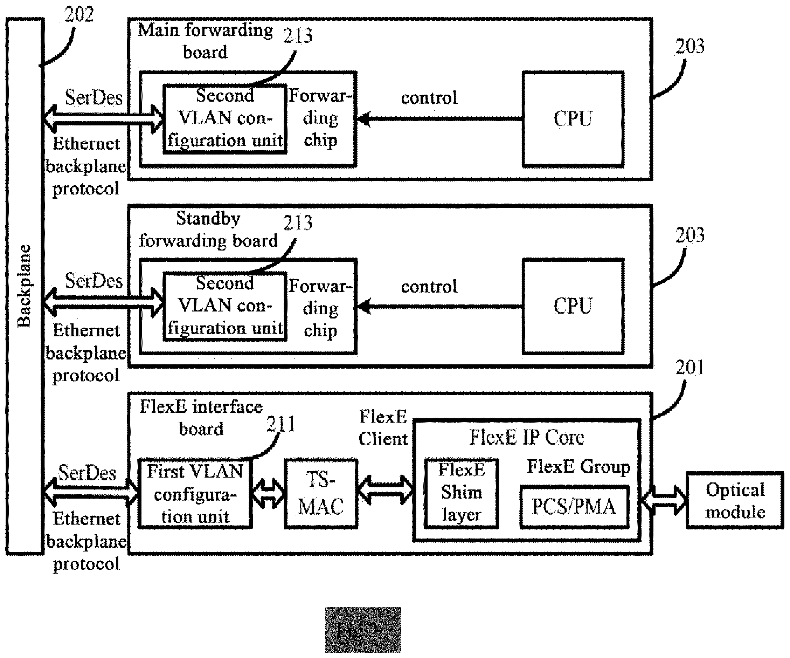

To solve the above problems, an example of the present disclosure provides a network device. As shown in Fig. 2, the network device includes a FlexE interface board 201, a backplane 201 and at least one forwarding board 203. Fig. 2 only takes two forwarding boards 203 as an example for illustration, which is not for limitation.

A first VLAN configuration unit 211 is provided on the FlexE interface board 201, and the first VLAN configuration unit 211 is connected to the backplane 202 through a serializer/deserializer; a mapping relationship between FlexE service ports and FlexE channels is stored in the first VLAN configuration unit 211;
a second VLAN configuration unit 213 is provided on the at least one forwarding board 203, and the second VLAN configuration unit 213 is connected to the backplane 202 through a serializer/deserializer; the mapping relationship between the FlexE service ports and the FlexE channels is stored in the second VLAN configuration unit 213;
the serializer/deserializers transmit data frames by using an Ethernet backplane protocol.

In the technical solution provided by the examples of the present disclosure, the VLAN configuration units are respectively provided on the FlexE interface board and the forwarding board, and the VLAN configuration units are connected to the backplane through the serializer/deserializers (such as SerDes), and the serializer/deserializers transmit the data frames by using the Ethernet backplane protocol. The Ethernet backplane protocol is a standard protocol, and most of the existing FlexE interface boards and forwarding boards support the Ethernet backplane protocol, which reduces the difficulty of chip selection for the FlexE interface board and the forwarding board, and there is no need to use a dedicated chip that supports the Interlaken protocol, thereby reducing the hardware cost of the network device. In the examples of the present disclosure, the difficulty of chip selection is reduced, the hardware cost is reduced, and the Ethernet backplane protocol is the standard protocol. The Ethernet backplane protocol is used to meet the needs of flexible channelization on the system side of the FlexE interface card, and the technical compatibility is great, which provides more options for the manufacture of the network device, improves the flexibility of the manufacture of the network device, and improves the scalability of the network device.

In the example of the present disclosure, the network device may be a distributed network device or a centralized network device. The network device may also include other components such as a chassis, and the FlexE interface board 201 and the forwarding board 203 may further include other modules. As shown in Fig. 2, the FlexE interface board 201 may further include a FlexE IP Core and a TS-MAC module, etc., and the forwarding board 203 may further include a CPU, etc.

Wherein the FlexE IP Core is to implement the FlexE Shim layer and PCS/PMA, and to implement mapping and demapping of the FlexE Client and the FlexE Group. The TS-MAC module is to implement the FlexE Client rate matching. The CPU is to control the forwarding chip and modules on the FlexE interface board.

Data communication chip selection of the FlexE interface board 201 can be a FPGA or MAC chip with a FlexE function. A VLAN configuration unit, namely the first VLAN configuration unit 211, is provided on the FlexE interface board 201. The first VLAN configuration unit 211 is on a system side of the FlexE interface board 201. The first VLAN configuration unit 211 is to parse and configure the FlexE tag (TAG) of the Ethernet backplane channel, so as to implement a mutual mapping between a channel identifier (Channel ID) of the FlexE tag and a FlexE Client ID.

In response to determining that the network device includes the multiple forwarding boards 203, the multiple forwarding boards 203 may include one main forwarding board and one or more standby forwarding boards. Fig. 2 only takes one main forwarding board and one standby forwarding board as an example, which is not as limitation. A VLAN configuration unit, namely a second VLAN configuration unit 213, is provided on the forwarding board 203. The second VLAN configuration unit 213 can be provided on the forwarding chip in the forwarding board 203, as shown in Fig. 2. The forwarding chip can be a switching chip or a network processor (NP) chip, etc. On the forwarding chip, the FlexE service port is represented by using a logical inbound port, that is, one FlexE service port corresponds to one logical inbound port.

The first VLAN configuration unit 211 and the second VLAN configuration unit 213 are connected through the backplane 202 and the serializer/deserializer (such as SerDes). On the serializer/deserializer data link, the data frame is transmitted by using the Ethernet backplane protocol, which is compatible with most forwarding chips.

In the example of the present disclosure, in order to achieve fine-grained resource management and data isolation, in response to determining that the FlexE interface board is initialized, based on the forwarding chip resource and product specifications (i.e., the specifications of the FlexE interface board), the system side of the FlexE interface board and the forwarding board respectively statically initialize one or more Ethernet ports. For example, in response to determining that the specification of the FlexE interface board is 100G and the specification of one Ethernet port is 100G, then one Ethernet port can be statically initialized on the system side of the FlexE interface board and the forwarding board respectively; in response to determining that the specification of one Ethernet port is 50G, then two Ethernet ports can be statically initialized on the system side of the FlexE interface board and the forwarding board respectively.

The Ethernet backplane protocol is provided between the system side of the FlexE interface board and an Ethernet port on the forwarding board. In this way, the first VLAN configuration unit 211 and the second VLAN configuration unit 213 can be connected to the backplane 202 through the serializer/deserializer by using the Ethernet backplane protocol on the Ethernet port, thereby realizing connection between the forwarding board 203 and the FlexE interface board 201 by using the Ethernet backplane protocol.

Based on the Ethernet port, the CPU on the forwarding board 203 side performs VLAN allocation according to the specifications of the FlexE interface board, that is, statically creates a VLAN logical port (i.e., a virtual interface) corresponding to the specifications of the FlexE service port to ensure that each VLAN logical port has independent forwarding resource to achieve the fine-grained resource management and the data isolation. For example, the minimum granularity of FlexE is 5G, and the specification of the 100G FlexE interface board is 100G/5G=20 FlexE service ports, that is, the 100G FlexE interface board can create up to 20 FlexE service ports. In response to determining that the FlexE interface board 201 is initialized, the forwarding board 203 and the system side of the FlexE interface board 201 creates a 100G Ethernet port, and creates 20 VLAN logical ports based on this 100G Ethernet port. The VLAN logical ports correspond one-to-one with the FlexE service ports, as shown in Table 1.

**Table 1**

| **Client ID** | **Channel ID** |
|---|---|
| 1 | 1 |
| 2 | 2 |
| 3 | 3 |
| ... | ... |
| 19 | 19 |
| 20 | 20 |

Table 1, the client identifier (Client ID) corresponds to the FlexE service port, that is, each of the Client IDs numbered from 1 to 20 correspond to one FlexE service port respectively. The channel identifier (Channel ID) corresponds to the VLAN logical port, that is, each of the Channel IDs numbered from 1 to 20 correspond to one VLAN logical port respectively. In the example of the present disclosure, one VLAN logical port is one FlexE channel, and an identifier (Channel ID) of the FlexE channel is a VLAN identifier (VLAN ID) of the VLAN logical port.

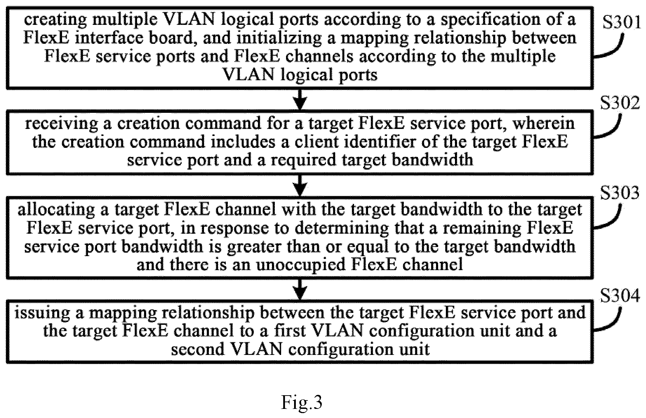

Since the VLAN logical port is initialized and the FlexE initializes multiple VLAN logical ports on the interface board and forwarding board through different VLAN IDs, the purpose of resource separation and isolation can be achieved. In addition, the CPU can obtain a static mapping relationship between the FlexE service ports and the FlexE channels. Subsequently, the CPU of the main forwarding board can dynamically create the FlexE service port. The creation process by the FlexE service port shown in Fig. 3 can include the following blocks.

Block S301, creating multiple VLAN logical ports according to a specification of a FlexE interface board, and initializing a mapping relationship between the FlexE service ports and a FlexE channels according to the multiple VLAN logical ports.

For the initialization of the mapping relationship between the FlexE service ports and the FlexE channels, the relevant description of the initialization portion of the FlexE interface board above may be referred, which will not be repeated here.

Block S302, receiving a creation command for a target FlexE service port, wherein the creation command includes a client identifier of the target FlexE service port and a required target bandwidth.

In the example of the present disclosure, a management module of the FlexE interface board may be designed. The management module provides an interface and a control plane. A user may construct a command line for creating a FlexE service port by using the management module, such as a command for creating the target FlexE service port. The management module sends a command for creating a target FlexE service port (i.e., the above-mentioned creation command) to the CPU.

Block S303, allocating a target FlexE channel with the target bandwidth to the target FlexE service port, in response to determining that a remaining FlexE service port bandwidth is greater than or equal to the target bandwidth and there is an unoccupied FlexE channel.

After receiving the creation command, the CPU can extract a client identifier (Client ID) of the target FlexE service port and a target bandwidth from the creation command, and then determine whether the service port resource are remaining, that is, whether the remaining FlexE service port bandwidth is greater than or equal to the target bandwidth, and whether there is an unoccupied FlexE channel. In response to determining that the service port resource are remaining, that is, the remaining FlexE service port bandwidth is greater than or equal to the target bandwidth, and there is an unoccupied FlexE channel, the CPU can allocate the target FlexE channel with the target bandwidth to the target FlexE service port.

In response to determining that there is no remaining service port resource, that is, the remaining FlexE service port bandwidth is less than the target bandwidth, or all the FlexE channels are occupied, the CPU can output prompt information indicating insufficient service port resource to prompt the user to solve the problem as soon as possible.

For example, the CPU initializes the 100G FlexE interface board, and the resulting mapping relationship is shown in Table 1. The CPU receives a creation command 1, which includes a Client ID 2 and a target bandwidth 50G. The CPU determines that the remaining FlexE service port bandwidth is 100G>50G, and all the 20 FlexE channels are not occupied. Then, a 50G FlexE channel, such as FlexE channel 1, is allocated to the FlexE service port of the Client ID 2. At this time, the mapping relationship between the dynamically created FlexE service port and the FlexE channel is shown in Table 2.

**Table 2**

| **Client ID** | **Channel ID** |
|---|---|
| 2 | 1 |

The CPU receives a creation command 2, which includes a Client ID 21 and a target bandwidth 40G. The CPU determines that the remaining FlexE service port bandwidth is 100G-50G=50G>40G, and 19 FlexE channels are not occupied. Then, a 40G FlexE channel, such as FlexE channel 2, is allocated to the FlexE service port of Client ID 21. At this time, the mapping relationship between the dynamically created FlexE service port and the FlexE channel is shown in Table 3.

**Table 3**

| **Client ID** | **Channel ID** |
|---|---|
| 2 | 1 |
| 21 | 2 |

The CPU receives a creation command 3, which includes a Client ID 1 and a target bandwidth 20G. The CPU determines that the remaining FlexE service port bandwidth is 50G-40G=10G<20G, and outputs prompt information indicating that the service port resource is insufficient. No FlexE channel is allocated to the FlexE service port of the Client ID 1.

Block S304, issuing a mapping relationship between the target FlexE service port and the target FlexE channel to a first VLAN configuration unit and a second VLAN configuration unit.

After allocating the target FlexE channel with the target bandwidth to the target FlexE service port, the CPU obtains the mapping relationship between the target FlexE service port and the target FlexE channel, and then can issue the mapping relationship to the first VLAN configuration unit 211 and the second VLAN configuration unit 213.

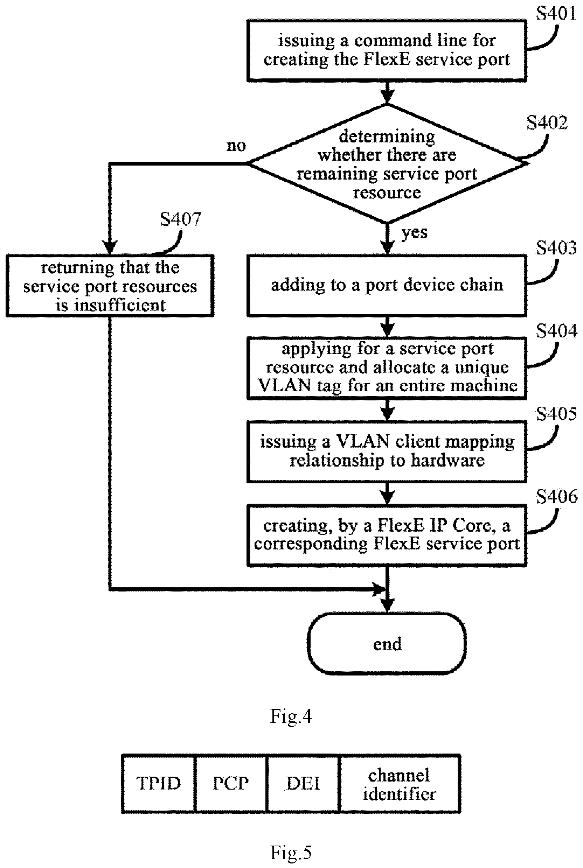

In an example of the present disclosure, the FlexE interface board 201 may further include a FlexE IP Core, etc., which may also participate in the creation of a FlexE service port. As shown in Fig. 4, the following blocks may be included.

Block S401, issuing, by a management module, a command line for creating the FlexE service port to a CPU. For details, the relevant description of the above block S302 may be referred.

Block S402, determining, by the CPU, whether there are remaining service port resource. In response to determining that there is remaining service port resource, executing block S403; in response to determining that there is no remaining service port resource, executing block S407. For details, the relevant description of block S303 above may be referred.

Block S403, adding, by the CPU, a Client ID in the command line to a port device chain. This facilitates the CPU to manage the FlexE service port. The port device chain is to store a Client ID of the FlexE service port.

Block S404, applying, by the CPU, for a service port resource and allocates a unique VLAN tag for an entire machine.

In the example of the present disclosure, the CPU allocates a FlexE channel and the bandwidth of the FlexE channel to the FlexE service port, and allocates a unique VLAN tag of the entire machine corresponding to the FlexE service port. The VLAN tag is a FlexE tag, as shown in Fig. 5, which includes a tag protocol identifier (TPID) and a customer tag (C-Tag). The customer tag includes a priority code point (PCP), a drop appropriateness indicator (DEI), and a channel identifier (i.e., a VLAN identifier).

In the allocated VLAN tag, TPID, PCP and DEI can all use default values, such as TPID = 0x8100, and the default values are preset in the CPU.

Block S405, issuing, by the CPU, a VLAN client mapping relationship to hardware.

In the example of the present disclosure, the CPU can obtain the mapping relationship between the FlexE channels and the FlexE service ports (i.e., the VLAN client mapping relationship) in block S404, and the CPU issues the mapping relationship to the VLAN configuration units of the forwarding chip and the FlexE interface board, and issues the FlexE service port and the allocated bandwidth information to the FlexE IP Core.

Block S406, creating, by a FlexE IP Core, a corresponding FlexE service port according to the received information.

Subsequently, the FlexE IP Core can send a packet to the remote device through the FlexE service port and then receive a packet sent by the remote device.

Block S407, returning, by the CPU, prompt information indicating that the service port resource is insufficient to the management module.

In the example of the present disclosure, users can flexibly configure VLAN allocation rules and channel mapping rules to achieve dynamic adjustment of the FlexE service ports and the VLAN logical ports. Through reasonable allocations of VLAN and FlexE channels with required bandwidths, a similar effect to hard slicing is achieved, ensuring that different FlexE channels having independent and isolated forwarding resources, avoiding excessive hardware overhead, achieving efficient use of hardware resource, and improving the cost-effectiveness. In addition, the system side of the FlexE interface board allocates the FlexE channel through the VLAN technology, which can achieve flexible matching with different types of forwarding chips, cause the device to adapt to a variety of network environments and application scenarios.

After the mapping relationship between the FlexE service ports and the FlexE channels is issued to the hardware, the network device can process data by using a corresponding FlexE service port. The following takes two scenarios of the packet receiving direction and the packet sending direction as examples to illustrate the data processing flow.

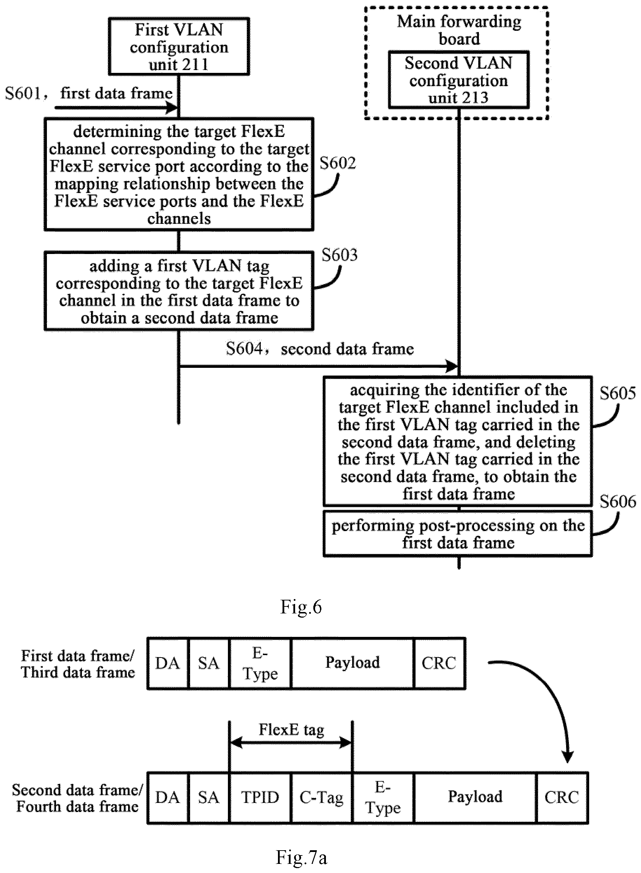

In the packet receiving direction, the first VLAN configuration unit 211 can be to: receive a first data frame from the target FlexE service port on the FlexE interface board 21; determine the target FlexE channel corresponding to the target FlexE service port according to the mapping relationship between the FlexE service ports and the FlexE channels; add a first VLAN tag corresponding to the target FlexE channel in the first data frame to obtain a second data frame, wherein a VLAN identifier included in the first VLAN tag is an identifier of the target FlexE channel; send the second data frame to a main forwarding board in at least one forwarding board 23. Correspondingly, the second VLAN configuration unit 213 can be to: receive the second data frame from the FlexE interface board 21; acquire the identifier of the target FlexE channel included in the first VLAN tag carried in the second data frame, and delete the first VLAN tag carried in the second data frame to obtain the first data frame; perform post-processing on the first data frame according to the logical inbound port of a forwarding board corresponding to the identifier of the target FlexE channel. For the specific data processing flow, blocks S601 to S606 shown in Fig. 6 may be referred.

In the example of the present disclosure, the target FlexE service port is any FlexE service port dynamically created by the CPU. The first data frame is any data frame received through the target FlexE service port. After receiving the first data frame through the target FlexE service port, the FlexE IP Core sends the first data frame to the first VLAN configuration unit 211 through the TS-MAC module.

The first VLAN configuration unit 211 determines the target FlexE channel corresponding to the target FlexE service port according to the mapping relationship between the FlexE service ports and the FlexE channels issued by the CPU, and then acquires a corresponding VLAN tag, such as the first VLAN tag, and adds the first VLAN tag corresponding to the target FlexE channel to the first data frame to obtain the second data frame.

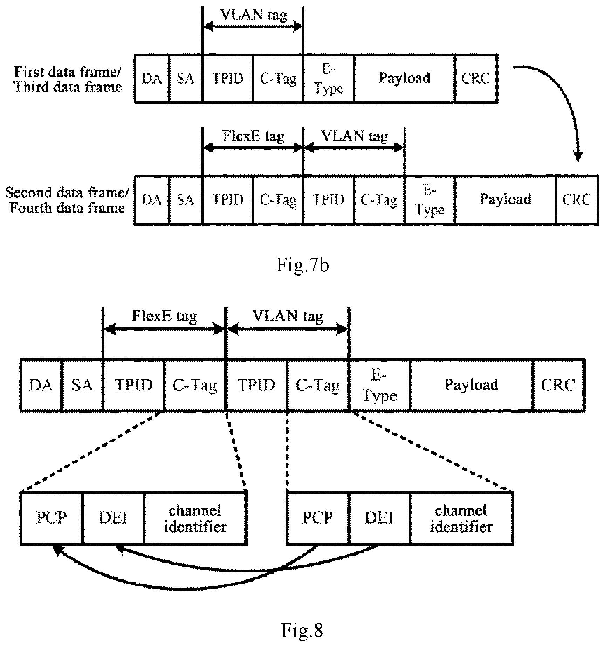

In the example of the present disclosure, a position where the first VLAN tag is added to the data frame can be a preset position. In order to adapt to the existing standard and facilitate the implementation of the example of the present disclosure, the first VLAN tag can be added between a source MAC address (SA) field of the first data frame and a Ethernet type (E-Type) field, such as a 4-byte FlexE tag (i.e., the first VLAN tag) shown in Fig. 7a, that is, the first VLAN tag is at a VLAN tag position specified in the existing standard protocol. In response to determining that the first data frame carries the second VLAN tag, the first VLAN tag is added between the source MAC address field of the first data frame and the second VLAN tag carried in the first data frame, such as the 4-byte FlexE tag (i.e., the first VLAN tag) shown in Fig. 7b. At this time, the first VLAN tag is still at the VLAN tag position specified in the existing standard protocol. The VLAN tag in Fig. 7b is an original VLAN tag carried in the data frame, such as the second VLAN tag.

In Fig. 7a and Fig. 7b, the data frame may further include a destination MAC address field DA, a cyclic redundancy check (CRC) field, a payload field, and the like.

In some examples, the first data frame carries a second VLAN tag. In this case, the first VLAN configuration unit 211 can be to: acquire a first VLAN tag corresponding to a target FlexE channel in response to determining that the first data frame carries the second VLAN tag, fill other fields included in the first VLAN tag with other fields included in the second VLAN tag, wherein the other fields are fields other than a VLAN identifier field; add the filled first VLAN tag to the first data frame to obtain a second data frame. In a data frame shown in Fig. 8, a PCP field and a DEI field included in a FlexE tag multiplex a PCP field and a DEI field included in a VLAN tag originally carried in the data frame. By multiplexing the other fields included in the VLAN tag originally carried in the data frame, it is convenient to perform traffic classification control on the data frame.

After obtaining the second data frame, the first VLAN configuration unit 211 sends the second data frame to the backplane 22 through a serializer/deserializer by using a Ethernet backplane protocol; the backplane 22 sends the second data frame to the second VLAN configuration unit 213 through a serializer/deserializer by using the Ethernet backplane protocol.

After receiving the second data frame, the second VLAN configuration unit 213 can acquire an identifier of the target FlexE channel from the first VLAN tag carried in the second data frame, and then determine the logical inbound port of the forwarding board corresponding to the identifier of the target FlexE channel, and delete the first VLAN tag carried in the second data frame to restore the second data frame to the first data frame. The second VLAN configuration unit 213 can transmit the logical inbound port of the forwarding board corresponding to the identifier of the target FlexE channel to a processing unit of the forwarding chip, and the processing unit performs post-processing on the first data frame according to the logical inbound port and a forwarding table, which ensures normal processing of the first data frame.

The above-mentioned processing unit performs post-processing on the first data frame, which may be that: the first data frame is sent to the FlexE interface board through the second VLAN configuration unit 213, and the FlexE interface board forwards the first data frame to the remote device. The processing unit performs the post-processing on the first data frame, which may also be: the first data frame is sent to the CPU, and the CPU processes the first data frame. The example of the present disclosure does not limit the specific method of post-processing the first data frame.

In the example of the present disclosure, after receiving the second data frame, the second VLAN configuration unit 213 may further send the second data frame to the CPU, and the CPU processes the second data frame. The example of the present disclosure does not limit the specific method of the second VLAN configuration unit 213 processing the second data frame.

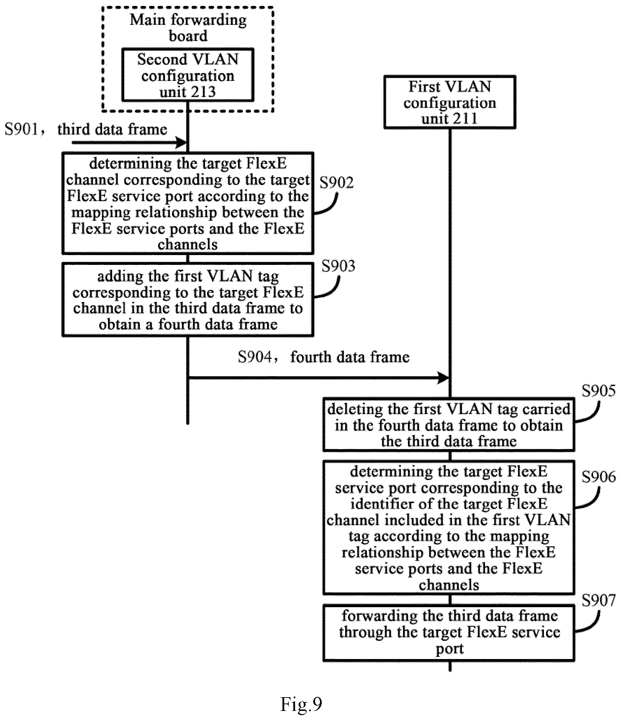

In the packet sending direction, the second VLAN configuration unit 213 can be to: acquire a third data frame sent to the target FlexE service port on the FlexE interface board; determine the target FlexE channel corresponding to the target FlexE service port according to the mapping relationship between the FlexE service ports and the FlexE channels; add the first VLAN tag corresponding to the target FlexE channel in the third data frame to obtain a fourth data frame, wherein the VLAN identifier included in the first VLAN tag is the identifier of the target FlexE channel; send the fourth data frame to the FlexE interface board. Correspondingly, the first VLAN configuration unit 211 can be to: receive the fourth data frame from at least one forwarding board; delete the first VLAN tag carried in the fourth data frame to obtain a third data frame; determine the target FlexE service port corresponding to the identifier of the target FlexE channel included in the first VLAN tag according to the mapping relationship between the FlexE service ports and the FlexE channels; forward the third data frame through the target FlexE service port. For the specific data processing flow, blocks S901 to S907 shown in Fig. 9 may be referred.

In the example of the present disclosure, the target FlexE service port is any FlexE service port dynamically created by the CPU. The third data frame is any data frame sent to the target FlexE service port.

The second VLAN configuration unit 213 determines the target FlexE channel corresponding to the target FlexE service port according to the mapping relationship between the FlexE service ports and the FlexE channels issued by the CPU, and then acquires a corresponding VLAN tag, such as the first VLAN tag, , and adds the first VLAN tag corresponding to the target FlexE channel to the third data frame to obtain the fourth data frame.

In the example of the present disclosure, a position where the first VLAN tag is added to the data frame can be a preset position. In order to adapt to the existing standard and facilitate the implementation of the example of the present disclosure, the first VLAN tag can be added between a source MAC address field of the third data frame and a Ethernet type field, such as a 4-byte FlexE tag shown in Fig. 7a. In response to determining that the third data frame carries the third VLAN tag, the first VLAN tag is added between the source MAC address field of the third data frame and the third VLAN tag carried in the third data frame, such as the 4-byte FlexE tag shown in Fig. 7b. The VLAN tag in Fig. 7b is a VLAN tag carried in the data frame, such as the third VLAN tag.

In some examples, the third data frame carries an original third VLAN tag. In this case, the second VLAN configuration unit 213 can be to: acquire a first VLAN tag corresponding to a target FlexE channel in response to determining that the third data frame carries the third VLAN tag, fill other fields included in the first VLAN tag with other fields included in the third VLAN tag, wherein the other fields in a VLAN tag are fields other than a VLAN ID fieldin this VLAN tag; add the filled first VLAN tag to the third data frame to obtain a fourth data frame. In a data frame shown in Fig. 8, a PCP field and a DEI field included in a FlexE tag multiplex a PCP field and a DEI field included in a VLAN tag originally carried in the data frame. By multiplexing the other fields included in the VLAN tag originally carried in the data frame, it is convenient to perform traffic classification control on the data frame.

After obtaining the fourth data frame, the second VLAN configuration unit 213 sends the fourth data frame to the backplane 22 through a serializer/deserializer by using a Ethernet backplane protocol; the backplane 22 sends the fourth data frame to the first VLAN configuration unit 211 through a serializer/deserializer by using the Ethernet backplane protocol.

After receiving the fourth data frame, the first VLAN configuration unit 211 can delete the first VLAN tag carried in the fourth data frame to restore the fourth data frame to the third data frame, and determine the target FlexE service port corresponding to the identifier of the target FlexE channel included in the first VLAN tag according to the mapping relationship between the FlexE service ports and the FlexE channels issued by the CPU, and send the third data frame to the FlexE IP Core through the TS-MAC module. The FlexE IP Core sends the third data frame to the remote device through the target FlexE service port.

In the example of the present disclosure, after receiving the fourth data frame, the first VLAN configuration unit 211 can also send the fourth data frame to the FlexE IP Core directly through the TS-MAC module, and the FlexE IP Core sends the fourth data frame to the remote device through the target FlexE service port. In this case, the remote device only needs to support identification and deletion of the first VLAN tag. The example of the present disclosure does not limit the specific method of the first VLAN configuration unit 211 processing the fourth data frame.

By using the technical solution provided by the examples of the present disclosure, the problems of limited chip support, high hardware cost and technical compatibility in the network device are solves, specifically as follows:
(1) Extending compatibility: based on the Ethernet backplane protocol, the VLAN technology is used to allocate channels, that is, VLAN logical port allocation, to improve the compatibility of the flexible channelization implementation solution with the FlexE interface board and forwarding board, the selection of only high-cost dedicated chips that support the Interlaken protocol is avoided, and the range of usable chip categories is expanded, thereby providing more choices and flexibility for equipment manufacturing.
   In addition, the FlexE interface board and forwarding board perform channel allocation by using the VLAN technology, which can achieve flexible matching with different types of forwarding chips, cause the device to adapt to a variety of network environments and application scenarios.
(2) Reducing hardware costs: without the need to replace the existing network device infrastructure, the Ethernet backplane protocol and VLAN technology are used to achieve efficient interconnection and flexible scheduling of the network device, which reduces the system hardware procurement and maintenance costs, ensures that overall cost of device manufacturing and assembly is within an acceptable range, and adapts to the needs of different scenarios, and to the construction scenarios of a large-scale network device.
   In addition, through reasonable VLAN allocation and forwarding resource scheduling, excessive hardware overhead can be avoided, efficient use of hardware resource can be achieved, and cost-effectiveness can be improved.
(3) Increasing system flexibility: a flexible VLAN allocation method is provided, that is, without changing the physical network topology, different VLAN logical ports between the FlexE interface board and the forwarding board are implemented, and the allocation of services and the adjustment of bandwidth and forwarding resource are performed by using the VLAN tag, so that flexible and convenient adjustment methods for multiple business scenarios are provided.
   In addition, the management module can provide a flexible control plane, allowing the user to remotely configure and dynamically adjust VLAN allocation rules and channel mapping strategies (i.e. bandwidth and resource strategies) according to actual needs, in order to adapt to different business needs and network conditions and improve network management efficiency.
(4) Realizing an effect of hard slicing: using the VLAN technology to allocate and manage Ethernet channels, physical and logical isolation of channels and resource is achieved, which ensures that each service data has independent bandwidth and forwarding resource, provides an effect similar to professional hard slicing, enables network resource to be used more efficiently and securely, thereby enhancing the security and stability of the network resource.
   Through the isolation and independent bandwidth allocation of VLAN logical ports, it is ensured that services with different service quality requirements can each obtain stable transmission bandwidth and resource, thereby improving the service quality of the overall network.
(5) Improving system performance and reliability: through the high-speed SerDes interface and the standard Ethernet backplane protocol, high-speed, low-latency data transmission is achieved, which ensures the performance of the system; in addition, hard channelization processing and resource allocation technology (that is, the above-mentioned technology of using VLAN technology to allocate and manage Ethernet channels) ensures the load balancing and stable operation of the system, which improves the overall reliability of the system.

Through the technical solution proposed in the example of the present disclosure, the network device uses the VLAN technology and the Ethernet backplane protocol to solve the chip selection and compatibility problems, reduce hardware costs and deployment complexity. The example of the present disclosure provides a flexible and efficient channel allocation and resource management method, achieves the effect of high compatibility, low cost, flexible management, efficient transmission and stable operation, greatly improves economic benefits and operational flexibility of the system, and meets challenges of modern network devices for high bandwidth and diversified service requirements.

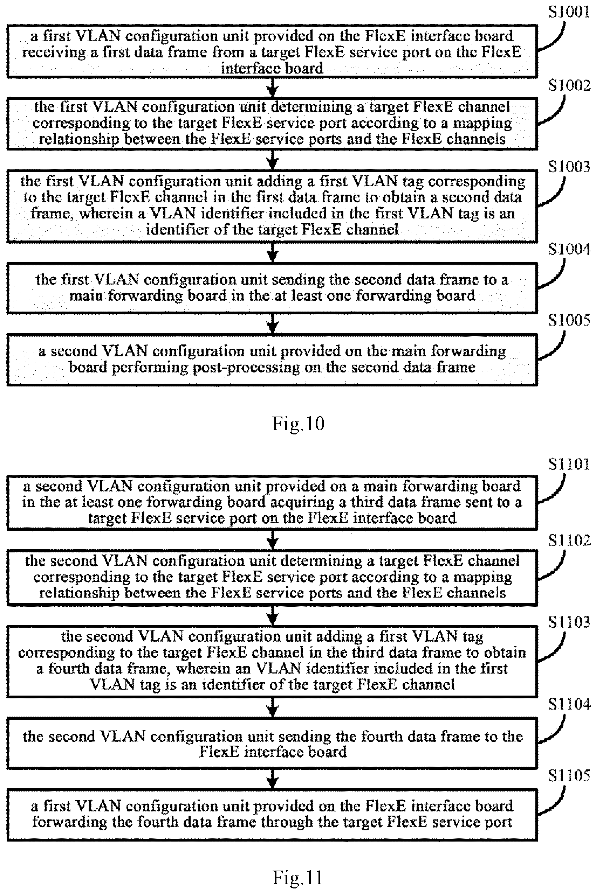

Corresponding to the above network device, an example of the present disclosure further provides a data processing method, as shown in Fig. 10, wherein the method is applied to the above network device, the network device may include a FlexE interface board, a backplane and at least one forwarding board, and the specific structure may refer to Fig. 2; the method includes the following blocks:
Block S1001, a first VLAN configuration unit provided on the FlexE interface board receiving a first data frame from a target FlexE service port on the FlexE interface board;
Block S 1002, the first VLAN configuration unit determining a target FlexE channel corresponding to the target FlexE service port according to a mapping relationship between the FlexE service ports and the FlexE channels;
Block S1003, the first VLAN configuration unit adding a first VLAN tag corresponding to the target FlexE channel in the first data frame to obtain a second data frame, wherein a VLAN identifier included in the first VLAN tag is an identifier of the target FlexE channel;
Block S1004, the first VLAN configuration unit sending the second data frame to a main forwarding board in the at least one forwarding board;
Block S1005, a second VLAN configuration unit provided on the main forwarding board performing post-processing on the second data frame.

In the technical solution provided by the examples of the present disclosure, the VLAN configuration units are respectively provided on the FlexE interface board and the forwarding board, and the VLAN configuration unit is connected to the backplane through the serializer/deserializer (such as SerDes), and the serializer/deserializer transmits the data frame by using the Ethernet backplane protocol. The Ethernet backplane protocol is a standard protocol, and most of the existing FlexE interface boards and forwarding boards support the Ethernet backplane protocol, which reduces the difficulty of chip selection for the FlexE interface board and the forwarding board, and there is no need to use a dedicated chip that supports the Interlaken protocol, thereby reducing the hardware cost of the network device. In the examples of the present disclosure, the difficulty of chip selection is reduced, the hardware cost is reduced, and the Ethernet backplane protocol is the standard protocol. The Ethernet backplane protocol is used to meet the needs of flexible channelization on the system side of the FlexE interface card, and the technical compatibility is great, which provides more options for the manufacture of the network device, improves the flexibility of the manufacture of the network device, and improves the scalability of the network device.

In some examples, adding the first VLAN tag corresponding to the target FlexE channel in the first data frame to obtain the second data frame, includes:
in response to determining that the first data frame carries a second VLAN tag, acquiring the first VLAN tag corresponding to the target FlexE channel;
filling other fields included in the first VLAN tag with other fields included in the second VLAN tag, wherein the other fields in a VLAN tag are fields other than the VLAN identifier field in this VLAN tag;
adding a filled first VLAN tag to the first data frame to obtain the second data frame.

In some examples, performing the post-processing on the second data frame, includes:
acquiring an identifier of the target FlexE channel included in the first VLAN tag carried in the second data frame, and deleting the first VLAN tag carried in the second data frame to obtain the first data frame;
performing the post-processing on the first data frame according to the logical inbound port of the forwarding board corresponding to the identifier of the target FlexE channel.

In some examples, the first VLAN tag is added between a source MAC address field of the first data frame and an Ethernet type field.

In some examples, the first VLAN tag is added between a source MAC address field of the first data frame and a second VLAN tag carried in the first data frame.

Corresponding to the above network device, an example of the present disclosure further provides a data processing method, as shown in Fig. 11, the method is applied to the above network device, the network device may include a FlexE interface board, a backplane and at least one forwarding board, and the specific structure may refer to Fig. 2; the method includes the following blocks:
Block S1101, a second VLAN configuration unit provided on a main forwarding board in the at least one forwarding board acquiring a third data frame sent to a target FlexE service port on the FlexE interface board;
Block S1102, the second VLAN configuration unit determining a target FlexE channel corresponding to the target FlexE service port according to a mapping relationship between the FlexE service ports and the FlexE channels;
Block S1103, the second VLAN configuration unit adding, a first VLAN tag corresponding to the target FlexE channel in the third data frame to obtain a fourth data frame, wherein a VLAN identifier included in the first VLAN tag is an identifier of the target FlexE channel;
Block S1104, the second VLAN configuration unit sending, the fourth data frame to the FlexE interface board;
Block S1105, a first VLAN configuration unit provided on the FlexE interface board forwarding the fourth data frame through the target FlexE service port.

In the technical solution provided by the examples of the present disclosure, the VLAN configuration units are respectively provided on the FlexE interface board and the forwarding board, and the VLAN configuration unit is connected to the backplane through the serializer/deserializer (such as SerDes), and the serializer/deserializer transmits the data frame by using the Ethernet backplane protocol. The Ethernet backplane protocol is a standard protocol, and most of the existing FlexE interface boards and forwarding boards support the Ethernet backplane protocol, which reduces the difficulty of chip selection for the FlexE interface board and the forwarding board, and there is no need to use a dedicated chip that supports the Interlaken protocol, thereby reducing the hardware cost of the network device. In the examples of the present disclosure, the difficulty of chip selection is reduced, the hardware cost is reduced, and the Ethernet backplane protocol is the standard protocol. The Ethernet backplane protocol is used to meet the needs of flexible channelization on the system side of the FlexE interface card, and the technical compatibility is great, which provides more options for the manufacture of the network device, improves the flexibility of the manufacture of the network device, and improves the scalability of the network device.

In some examples, adding the first VLAN tag corresponding to the target FlexE channel to the third data frame to obtain the fourth data frame, includes:
in response to determining that the third data frame carries a third VLAN tag, acquiring the first VLAN tag corresponding to the target FlexE channel;
filling other fields included in the first VLAN tag with other fields included in the third VLAN tag, wherein the other fields in a VLAN tag are fields other than the VLAN identifier field in this VLAN tag;
adding the filled first VLAN tag to the third data frame to obtain the fourth data frame.

In some examples, forwarding the fourth data frame through the target FlexE service port, includes:
deleting the first VLAN tag carried in the fourth data frame to obtain the third data frame;
determining the target FlexE service port corresponding to the identifier of the target FlexE channel included in the first VLAN tag according to the mapping relationship between the FlexE service ports and the FlexE channels;
forwarding the third data frame through the target FlexE service port.

In some examples, the first VLAN tag is added between a source MAC address field of the third data frame and an Ethernet type field.

In some examples, the first VLAN tag is added between a source MAC address field of the third data frame and a third VLAN tag carried in the third data frame.

In the above examples, it may be implemented in whole or in part by software, hardware, firmware or any combination thereof. In response to determining that implemented in software, it can be implemented in whole or in part in the form of a computer program product. The computer program product includes one or more computer instructions. In response to determining that the computer program instructions are loaded and executed on a computer, the processes or functions described in the examples of the present disclosure are generated in whole or in part. The computer may be a general purpose computer, special purpose computer, computer network, or other programmable device. The computer instructions may be stored in a computer readable storage medium or transmitted from one computer readable storage medium to another computer readable storage medium, for example, the computer instructions may be transmitted from a website, computer, server or data center to another website, computer, server, or data center by wire (such as coaxial cable, fiber optic, digital subscriber line (DSL)) or wirelessly (such as infrared, wireless, microwave, etc.). The computer-readable storage medium may be any available medium that can be accessed by a computer or a data storage device such as a server and a data center and the like that includes an integration of one or more available medium. The available medium may be magnetic media (such as a floppy disk, a hard disk, a magnetic tape), optical medium (such as DVD), or semiconductor media (such as Solid State Disk (SSD)) and the like.

It should be noted that in this article, relational terms such as first and second are only to distinguish one entity or operation from another, and do not necessarily require or imply any actual relationship or order between these entities or operations. Moreover, the terms "include", "comprise", or any other variation thereof are intended to encompass a non-exclusive inclusion, such that a process, method, article, or device that includes a series of elements not only includes those elements, but also other elements that are not explicitly listed, or also include elements inherent in such a process, method, article, or device. Without further limitations, the elements limited by the statement "including one..." do not exclude the existence of other identical elements in the process, method, article, or device that includes the elements.

The various examples in this specification are described in a relevant manner, and the same and similar parts between the various examples can be referred to each other, and each example focuses on the differences from other examples. In particular, for the examples of methods, since the description is basically similar to the examples of the network devices, it is relatively simple, and the relevant points can be referred to the partial description of the example of the network devices.

The above descriptions are only preferred examples of the present disclosure, and are not intended to limit the scope of protection of the present disclosure. Any modifications, equivalent replacements, improvements, etc. made within the spirit and principles of the present disclosure shall be included within the scope of protection of the present disclosure.

## Claims

1. A network device, which comprises a Flexible Ethernet, FlexE, interface board, a backplane and at least one forwarding board;
wherein a first virtual local area network, VLAN, configuration unit is provided on the FlexE interface board, and the first VLAN configuration unit is connected to the backplane through a serializer/deserializer; a mapping relationship between FlexE service ports and FlexE channels is stored in the first VLAN configuration unit;
wherein a second VLAN configuration unit is provided on the at least one forwarding board, and the second VLAN configuration unit is connected to the backplane through a serializer/deserializer; the mapping relationship between the FlexE service ports and the FlexE channels is stored in the second VLAN configuration unit;
each serializer/deserializer transmits a data frame by using an Ethernet backplane protocol.

2. The network device according to claim 1, wherein the first VLAN configuration unit is to:
receive a first data frame from a target FlexE service port on the FlexE interface board;
determine a target FlexE channel corresponding to the target FlexE service port according to the mapping relationship between the FlexE service ports and the FlexE channels;
add a first VLAN tag corresponding to the target FlexE channel to the first data frame to obtain a second data frame, wherein a VLAN identifier included in the first VLAN tag is an identifier of the target FlexE channel;
send the second data frame to a main forwarding board in the at least one forwarding board,
preferably, wherein the first VLAN configuration unit is to:
in response to determining that the first data frame carries a second VLAN tag, acquire the first VLAN tag corresponding to the target FlexE channel, and fill other fields included in the first VLAN tag with other fields included in the second VLAN tag, wherein the other fields in a VLAN tag are fields other than a VLAN identifier field in this VLAN tag;
add a filled first VLAN tag to the first data frame to obtain the second data frame.

3. The network device according to claim 2, wherein the second VLAN configuration unit is to:
receive the second data frame from the FlexE interface board;
acquire the identifier of the target FlexE channel included in the first VLAN tag carried in the second data frame, and delete the first VLAN tag carried in the second data frame to obtain the first data frame;
perform post-processing on the first data frame according to a logical inbound port of a forwarding board corresponding to the identifier of the target FlexE channel.

4. The network device according to claim 1, wherein the second VLAN configuration unit is to:
acquire a third data frame sent to a target FlexE service port on the FlexE interface board;
determine a target FlexE channel corresponding to the target FlexE service port according to the mapping relationship between the FlexE service ports and the FlexE channels;
add a first VLAN tag corresponding to the target FlexE channel to the third data frame to obtain a fourth data frame, wherein a VLAN identifier included in the first VLAN tag is an identifier of the target FlexE channel;
send the fourth data frame to the FlexE interface board,
preferably, wherein the second VLAN configuration unit is to:
in response to determining that the third data frame carries a third VLAN tag, acquire the first VLAN tag corresponding to the target FlexE channel, and fill other fields included in the first VLAN tag with other fields included in the third VLAN tag, wherein the other fields in a VLAN tag are fields other than a VLAN identifier field in this VLAN tag;
add a filled first VLAN tag to the third data frame to obtain the fourth data frame.

5. The network device according to claim 4, wherein the first VLAN configuration unit is to:
receive the fourth data frame from the at least one forwarding board;
delete the first VLAN tag carried in the fourth data frame to obtain the third data frame;
determine the target FlexE service port corresponding to the identifier of the target FlexE channel included in the first VLAN tag according to the mapping relationship between the FlexE service ports and the FlexE channels;
forward the third data frame through the target FlexE service port.

6. The network device according to any one of claims 2 to 5, wherein the first VLAN tag is added between a source media access control, MAC, address field of a data frame and an Ethernet type field,
preferably, wherein the first VLAN tag is added between the source MAC address field of the data frame and a VLAN tag carried in the data frame.

7. The network device according to any one of claims 1 to 5, wherein the at least one forwarding board further comprises a central processing unit, CPU, and the CPU is to:
create multiple VLAN logical ports according to a specification of the FlexE interface board, and initialize the mapping relationship between the FlexE service ports and the FlexE channels according to the multiple VLAN logical ports, wherein the VLAN logical ports correspond one-to-one with the FlexE channels;
receive a creation command for a target FlexE service port, wherein the creation command includes a client identifier of the target FlexE service port and a required target bandwidth;
allocate a target FlexE channel with the target bandwidth to the target FlexE service port in response to determining that a remaining FlexE service port bandwidth is greater than or equal to the target bandwidth and there is an unoccupied FlexE channel;
issue a mapping relationship between the target FlexE service port and the target FlexE channel to the first VLAN configuration unit and the second VLAN configuration unit.

8. A data processing method, which is applied to the network device according to any one of claims 1 to 7, wherein the network device comprises a Flexible Ethernet, FlexE, interface board, a backplane and at least one forwarding board; the method comprises:
a first VLAN configuration unit provided on the FlexE interface board receiving a first data frame from a target FlexE service port on the FlexE interface board; determining a target FlexE channel corresponding to the target FlexE service port according to a mapping relationship between FlexE service ports and FlexE channels; adding a first VLAN tag corresponding to the target FlexE channel to the first data frame to obtain a second data frame, wherein a VLAN identifier included in the first VLAN tag is an identifier of the target FlexE channel; and sending the second data frame to a main forwarding board in the at least one forwarding board;
a second VLAN configuration unit provided on the main forwarding board performing post-processing on the second data frame.

9. The method according to claim 8, wherein adding the first VLAN tag corresponding to the target FlexE channel to the first data frame to obtain the second data frame, comprises:
in response to determining that the first data frame carries a second VLAN tag, acquiring the first VLAN tag corresponding to the target FlexE channel;
filling other fields included in the first VLAN tag with other fields included in the second VLAN tag, wherein the other fields in a VLAN tag are fields other than a VLAN identifier field in this VLAN tag;
adding a filled first VLAN tag to the first data frame to obtain the second data frame.

10. The method according to claim 8, wherein performing the post-processing on the second data frame, comprises:
acquiring the identifier of the target FlexE channel included in the first VLAN tag carried in the second data frame, and deleting the first VLAN tag carried in the second data frame to obtain the first data frame;
performing the post-processing on the first data frame according to a logical inbound port of a forwarding board corresponding to the identifier of the target FlexE channel.

11. The method according to any one of claims 8 to 10, wherein the first VLAN tag is added between a source MAC address field of the first data frame and an Ethernet type field,
preferably, wherein the first VLAN tag is added between the source MAC address field of the first data frame and the second VLAN tag carried in the first data frame.

12. A data processing method, which is applied to the network device according to any one of claims 1 to 7, wherein the network device comprises a Flexible Ethernet, FlexE, interface board, a backplane and at least one forwarding board; the method comprises:
a second VLAN configuration unit provided on a main forwarding board of the at least one forwarding board acquiring a third data frame sent to a target FlexE service port on the FlexE interface board; determining a target FlexE channel corresponding to the target FlexE service port according to a mapping relationship between the FlexE service ports and the FlexE channels; adding a first VLAN tag corresponding to the target FlexE channel to the third data frame to obtain a fourth data frame, wherein a VLAN identifier included in the first VLAN tag is an identifier of the target FlexE channel; sending the fourth data frame to the FlexE interface board;
a first VLAN configuration unit provided on the FlexE interface board forwarding the fourth data frame through the target FlexE service port.

13. The method according to claim 12, wherein adding the first VLAN tag corresponding to the target FlexE channel to the third data frame to obtain the fourth data frame, comprises:
in response to determining that the third data frame carries a third VLAN tag, acquiring the first VLAN tag corresponding to the target FlexE channel;
filling other fields included in the first VLAN tag with other fields included in the third VLAN tag, wherein the other fields in a VLAN tag are fields other than a VLAN identifier field in this VLAN tag;
adding a filled first VLAN tag to the third data frame to obtain the fourth data frame.

14. The method according to claim 12, wherein forwarding the fourth data frame through the target FlexE service port, comprises:
deleting the first VLAN tag carried in the fourth data frame to obtain the third data frame;
determining the target FlexE service port corresponding to the identifier of the target FlexE channel included in the first VLAN tag according to the mapping relationship between the FlexE service ports and the FlexE channels;
forwarding the third data frame through the target FlexE service port.

15. The method according to any one of claims 12 to 14, wherein the first VLAN tag is added between a source MAC address field of the third data frame and an Ethernet type field,
preferably, wherein the first VLAN tag is added between the source MAC address field of the third data frame and a third VLAN tag carried in the third data frame.

## Amended claims

### Amended claims in accordance with Rule 137(2) EPC.

1. A network device, which comprises a Flexible Ethernet, FlexE, interface board (201), a backplane (202) and at least one forwarding board (203);
wherein a first virtual local area network, VLAN, configuration unit (211) is provided on the FlexE interface board (201), and the first VLAN configuration unit (211) is connected to the backplane (202) through a serializer/deserializer; a mapping relationship between FlexE service ports and FlexE channels is stored in the first VLAN configuration unit (211);
wherein a second VLAN configuration unit (213) is provided on the at least one forwarding board (203), and the second VLAN configuration unit (213) is connected to the backplane (202) through a serializer/deserializer; the mapping relationship between the FlexE service ports and the FlexE channels is stored in the second VLAN configuration unit (213);
each serializer/deserializer transmits a data frame by using an Ethernet backplane protocol.

2. The network device according to claim 1, wherein the first VLAN configuration unit (211) is to:
receive a first data frame from a target FlexE service port on the FlexE interface board (201);
determine a target FlexE channel corresponding to the target FlexE service port according to the mapping relationship between the FlexE service ports and the FlexE channels;
add a first VLAN tag corresponding to the target FlexE channel to the first data frame to obtain a second data frame, wherein a VLAN identifier included in the first VLAN tag is an identifier of the target FlexE channel;
send the second data frame to a main forwarding board in the at least one forwarding board (203).

3. The network device according to claim 2, wherein the second VLAN configuration unit (213) is to:
receive the second data frame from the FlexE interface board (201);
acquire the identifier of the target FlexE channel included in the first VLAN tag carried in the second data frame, and delete the first VLAN tag carried in the second data frame to obtain the first data frame;
perform post-processing on the first data frame according to a logical inbound port of a forwarding board corresponding to the identifier of the target FlexE channel.

4. The network device according to claim 1, wherein the second VLAN configuration unit ()213 is to:
acquire a third data frame sent to a target FlexE service port on the FlexE interface board;
determine a target FlexE channel corresponding to the target FlexE service port according to the mapping relationship between the FlexE service ports and the FlexE channels;
add a first VLAN tag corresponding to the target FlexE channel to the third data frame to obtain a fourth data frame, wherein a VLAN identifier included in the first VLAN tag is an identifier of the target FlexE channel;
send the fourth data frame to the FlexE interface board.

5. The network device according to claim 4, wherein the first VLAN configuration unit (211) is to:
receive the fourth data frame from the at least one forwarding board;
delete the first VLAN tag carried in the fourth data frame to obtain the third data frame;
determine the target FlexE service port corresponding to the identifier of the target FlexE channel included in the first VLAN tag according to the mapping relationship between the FlexE service ports and the FlexE channels;
forward the third data frame through the target FlexE service port.

6. The network device according to any one of claims 2 to 5, wherein the first VLAN tag is added between a source media access control, MAC, address field of a data frame and an Ethernet type field.

7. The network device according to any one of claims 1 to 5, wherein the at least one forwarding board (203) further comprises a central processing unit, CPU, and the CPU is to:
create multiple VLAN logical ports according to a specification of the FlexE interface board (201), and initialize the mapping relationship between the FlexE service ports and the FlexE channels according to the multiple VLAN logical ports, wherein the VLAN logical ports correspond one-to-one with the FlexE channels;
receive a creation command for a target FlexE service port, wherein the creation command includes a client identifier of the target FlexE service port and a required target bandwidth;
allocate a target FlexE channel with the target bandwidth to the target FlexE service port in response to determining that a remaining FlexE service port bandwidth is greater than or equal to the target bandwidth and there is an unoccupied FlexE channel;
issue a mapping relationship between the target FlexE service port and the target FlexE channel to the first VLAN configuration unit (211) and the second VLAN configuration unit (213).

8. A data processing method, which is applied to the network device according to any one of claims 1 to 7, wherein the network device comprises a Flexible Ethernet, FlexE, interface board (201), a backplane (202) and at least one forwarding board (203); the method comprises:
a first VLAN configuration unit (211) provided on the FlexE interface board (201) receiving (S1001) a first data frame from a target FlexE service port on the FlexE interface board (201); determining (S1002) a target FlexE channel corresponding to the target FlexE service port according to a mapping relationship between FlexE service ports and FlexE channels; adding (S1003) a first VLAN tag corresponding to the target FlexE channel to the first data frame to obtain a second data frame, wherein a VLAN identifier included in the first VLAN tag is an identifier of the target FlexE channel; and sending (S1004) the second data frame to a main forwarding board in the at least one forwarding board (203);
a second VLAN configuration unit (213) provided on the main forwarding board performing (S1005) post-processing on the second data frame.

9. The method according to claim 8, wherein adding (S1003) the first VLAN tag corresponding to the target FlexE channel to the first data frame to obtain the second data frame, comprises:
in response to determining that the first data frame carries a second VLAN tag, acquiring the first VLAN tag corresponding to the target FlexE channel;
filling other fields included in the first VLAN tag with other fields included in the second VLAN tag, wherein the other fields in a VLAN tag are fields other than a VLAN identifier field in this VLAN tag;
adding a filled first VLAN tag to the first data frame to obtain the second data frame.

10. The method according to claim 8, wherein performing (S1005) the post-processing on the second data frame, comprises:
acquiring the identifier of the target FlexE channel included in the first VLAN tag carried in the second data frame, and deleting the first VLAN tag carried in the second data frame to obtain the first data frame;
performing the post-processing on the first data frame according to a logical inbound port of a forwarding board corresponding to the identifier of the target FlexE channel.

11. The method according to any one of claims 8 to 10, wherein the first VLAN tag is added between a source MAC address field of the first data frame and an Ethernet type field.

12. A data processing method, which is applied to the network device according to any one of claims 1 to 7, wherein the network device comprises a Flexible Ethernet, FlexE, interface board (201), a backplane (202) and at least one forwarding board (203); the method comprises:
a second VLAN configuration unit (213) provided on a main forwarding board of the at least one forwarding board (203) acquiring (S1101) a third data frame sent to a target FlexE service port on the FlexE interface board (201); determining (S1102) a target FlexE channel corresponding to the target FlexE service port according to a mapping relationship between the FlexE service ports and the FlexE channels; adding (S1103) a first VLAN tag corresponding to the target FlexE channel to the third data frame to obtain a fourth data frame, wherein a VLAN identifier included in the first VLAN tag is an identifier of the target FlexE channel; sending (S1104) the fourth data frame to the FlexE interface board (201);
a first VLAN configuration unit (211) provided on the FlexE interface board (201) forwarding (S1105) the fourth data frame through the target FlexE service port.

13. The method according to claim 12, wherein adding (S1103) the first VLAN tag corresponding to the target FlexE channel to the third data frame to obtain the fourth data frame, comprises:
in response to determining that the third data frame carries a third VLAN tag, acquiring the first VLAN tag corresponding to the target FlexE channel;
filling other fields included in the first VLAN tag with other fields included in the third VLAN tag, wherein the other fields in a VLAN tag are fields other than a VLAN identifier field in this VLAN tag;
adding a filled first VLAN tag to the third data frame to obtain the fourth data frame.

14. The method according to claim 12, wherein forwarding (S1105) the fourth data frame through the target FlexE service port, comprises:
deleting the first VLAN tag carried in the fourth data frame to obtain the third data frame;
determining the target FlexE service port corresponding to the identifier of the target FlexE channel included in the first VLAN tag according to the mapping relationship between the FlexE service ports and the FlexE channels;
forwarding the third data frame through the target FlexE service port.

15. The method according to any one of claims 12 to 14, wherein the first VLAN tag is added between a source MAC address field of the third data frame and an Ethernet type field.
